(19) Europäisches Patentamt
European Patent Office
Office européen des brevets

(11) EP 1 288 912 A1

(12) EUROPEAN PATENT APPLICATION
published in accordance with Art. 158(3) EPC

(43) Date of publication:
05.03.2003 Bulletin 2003/10

(51) Int Cl.7: G10L 15/10, G10L 13/00

(21) Application number: 01919863.9

(86) International application number:
PCT/JP01/03079

(22) Date of filing: 10.04.2001

(87) International publication number:
WO 01/080222 (25.10.2001 Gazette 2001/43)

(84) Designated Contracting States:
AT BE CH CY DE DK ES FI FR GB GR IE IT LI LU
MC NL PT SE TR
Designated Extension States:
AL LT LV MK RO SI

(30) Priority: 14.04.2000 JP 2000114262

(71) Applicant: Sakai, Yasue
Saitama-shi, Saitama 336-0932 (JP)

(72) Inventor: KOYANAGI, Yukio
Saitama-shi, Saitama 336-0932 (JP)

(74) Representative: VOSSIUS & PARTNER
Siebertstrasse 4
81675 München (DE)

(54) SPEECH RECOGNITION METHOD AND DEVICE, SPEECH SYNTHESIS METHOD AND DEVICE, RECORDING MEDIUM

(57) There are provided: a data generating section 3 which differentiates an input aural signal, detects as a sample point a point where a differentiating value satisfies a predetermined condition, and obtains discrete amplitude data on detected sample points and timing data indicative of a time interval between the sample points, and a correlating section 4 for computing correlation data by using the amplitude data and the timing data. Input speech is recognized by matching correlation data, which is generated for input speech by a correlating section 4, with correlation data which is generated in the same manner in advance for a variety of speech and is stored in a data memory 6.

FIG. 1

## Description

[Background of the Invention]

[Field of the Invention]

The present invention relates to a speech recognition method and device, a speech synthesis method and device, and a recording medium for storing a program realizing these functions by software, and particularly concerns a speech recognizing technique for identifying speech of a person and so on and a speech synthesizing technique for producing speech from data.

[Description of the Related Art]

In recent years, attention has been given to a so-called speech processing interface for speech recognition that allows a calculator to recognize speech of a person and perform processing automatically. A speech recognizing technique varies from word speech recognition for recognizing a number and a word to sequential speech recognition for understanding a meaning and a content. Further, in a broad sense, speech recognition technique also includes speaker identification technique for identifying a speaker.

Particularly in recent years, attention has shifted from word speech recognition to sequential speech recognition and speech recognition for natural conversation. Moreover, a method has been studied, by which a calculator and a portable terminal are operated by speech using particular words as speech commands.

Meanwhile, in contrast to speech recognition, speech synthesizing technique has been developed, which synthesizes speech from data such as text and outputs the speech. For example, in a technique for synthesizing text speech, analysis is made on text data including a variety of characters such as Chinese characters and alphabets, and accents and intonation are provided based on a predetermined rule, so that speech is synthesized.

However, in the current speech recognizing technique, 'every speech cannot be recognized and there is a limit on a recognition degree. Namely, the same word may vary in voice from speaker to speaker, and accuracy on recognition may be different among speakers. Also, when the number of words to be recognized or the number of speakers increases, speech recognition becomes more difficult.

Meanwhile, in the current speech synthesizing technique, produced synthetic speech is still mechanical sound, and higher quality has been demanded for bringing synthetic sound closer to human speech.

Additionally, both of the current speech recognizing technique and speech synthesizing technique require a complicated processing, so that simple processing is demanded for achieving high-speed processing.

The present invention has been developed in view of the current circumstances and has as its object the provision of a completely new speech recognizing method and speech synthesizing method not heretofore attained to increase a recognition degree of speech, improve the quality of synthetic sound, and simplify the processing.

[Summary of the Invention]

According to a speech recognition method of the present invention, an input aural signal is differentiated, a point where a differentiating value satisfies a predetermined condition is detected as a sample point, discrete amplitude data on each detected sample point and timing data indicative 'of a time interval between sample points are obtained, correlation data is generated using the amplitude data and timing data, and input speech is recognized by matching the generated correlation data with correlation data generated and stored in advance for a variety of speech.

In this case, a lower-order bit of correlation data may be rounded.

Further, an input aural signal may undergo oversampling and the oversampled data may be sampled at a time interval of a point where a differentiating value satisfies a predetermined condition.

Moreover, a speech recognition device of the present invention is provided with an A/D converting means for performing A/D conversion on an input aural signal, a differentiating means for differentiating digital data outputted from the A/D converting means, a data generating means which detects as a sample point a point where a differentiating value obtained by the differentiating means satisfies a predetermined condition and which generates amplitude data on each detected sample point and timing data indicative of a time interval between sample points, a correlating means for generating correlation data by using the amplitude data and timing data that are generated by the data generating means, and a data matching means for recognizing input speech by matching correlation data, which is generated by the correlating means, with correlation data generated in the same manner and stored in a recording medium in advance for a variety of speech.

Here, the correlating means may round a lower-order bit of the correlation data.

Also, an oversampling means may be provided for oversampling digital data, which is outputted from the A/D converting means , by using a clock having an even number-times frequency, and the oversampled data may be sampled at a time interval of a point where a differentiating value satisfies a predetermined condition.

According to a speech synthesis method of the present invention, data other than speech is associated with a pair of amplitude data on a sample point where a differentiating value of an aural signal satisfies a predetermined condition and timing data indicative of a time interval between sample points, the amplitude data and timing data being generated in advance for the aural signal corresponding to the data other than speech, and when desired data is designated, the pair of the amplitude data and the timing data that is associated with the designated data is used for obtaining interpolation data for interpolating pieces of the amplitude data having a time interval indicated by the timing data, so that speech is synthesized.

Further, a speech synthesis device of the present invention is provided with a storing means for storing in association with data other than an aural signal a pair of amplitude data on a sample point where a differentiating value of an aural signal satisfies a predetermined condition and timing data indicative of a time interval between sample points, the amplitude data and timing data being generated in advance for the aural signal corresponding to the data other than speech, an interpolating means which obtains interpolation data for interpolating pieces of the amplitude data having a time interval indicated by the timing data when desired data is designated, the interpolation data being obtained by using the pair of the amplitude data and the timing data that is stored in the storing means in association with the designated data, and a D/A converting means for performing D/A conversion on interpolation data obtained by the interpolating means.

Moreover, a recording medium being capable of computer reading of the present invention records a program for allowing a computer to perform the steps of a speech recognition method discussed in claim 1 or the steps of a speech synthesis method discussed in claim 17, or a program for allowing a computer to function as a means of claim 9 or claim 19.

Since the present invention is realized by the above technical means, it is possible to provide a completely new and simple speech recognition method and a speech synthesis method that use amplitude data and timing data on a predetermined sample point.

In this case, instead of directly using amplitude data and timing data, since correlation data thereof is used, a speech recognition rate can be improved. Besides, since a lower-order bit of correlation data is rounded and oversampling is performed on an aural signal, a speech recognition rate can be further improved.

Additionally, since speech is synthesized using amplitude data and timing data that are generated from an actual aural signal, it is possible to synthesize speech closer to real speech merely by storing a small amount of data. Further, since speech is synthesized using amplitude data and timing data that are generated after oversampling is performed on an aural signal, it is possible to further improve the quality of synthetic speech.

As described above, according to the present invention, it is possible to improve a speech recognition rate, improve the quality of synthetic speech, and simplify the processing.

[Brief Description of the Drawings]

FIG. 1 is a block diagram showing an example of the configuration of a speech recognition device according to Embodiment 1;
FIG. 2 is a diagram for explaining a principle of speech recognition according to the present embodiment;
FIG. 3 is a block diagram showing an example of the configuration of a data generating section;
FIG. 4 is a diagram showing an example of the configuration of a differentiator shown in FIG. 3;
FIG. 5 is a block diagram showing an example of the configuration for detecting sample points by double differentiation;
FIG. 6 is a block diagram showing an example of the configuration of a speech synthesis device according to Embodiment 1;
FIG. 7 is a diagram for explaining a principle of speech synthesis according to the present embodiment;
FIG. 8A and 8B are diagrams showing a principle of interpolation according to the present embodiment by taking , out a section between time T1 and T2 of FIG. 7;
FIG. 9 is a diagram showing an example of a sampling function;
FIG. 10 is an explanatory drawing showing an interpolating operation for speech synthesis;
FIG. 11 is a diagram for explaining an interpolating equation, which is a specific example of data interpolation;
FIG. 12 is a block diagram showing an example of the configuration of a speech recognition device according to Embodiment 2;
FIG. 13 is a diagram showing a digital basic waveform used in Embodiment 2;
FIG. 14 is a diagram for explaining an operation example of oversampling and convolution according to Embodiment 2;
FIG. 15 is a diagram showing a function generated from a digital basic waveform according to Embodiment 2; and
FIG. 16 is a diagram showing an example of the configuration of an oversampling circuit shown in FIG. 12.

[Detailed Description of the Preferred Embodiments]

(Embodiment 1)

The following will describe an embodiment of the present invention in accordance with the accompanied drawings.

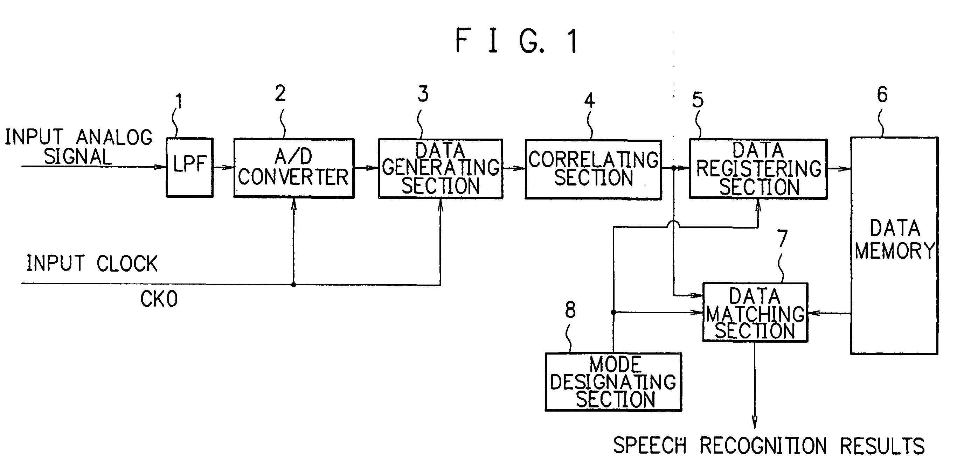

FIG. 1 is a block diagram showing an example of the configuration of a speech recognition device according to the present embodiment. As shown in FIG. 1, the speech recognition device of the present embodiment is constituted by a low-pass filter (LPF) 1, an A/D converter 2, a data generating section 3, a correlating section 4, a data registering section 5, a data memory 6, a data matching section 7, and a mode designating section 8.

In FIG. 1, an input analog signal is speech of a person and the like that is inputted from a microphone and so on (not shown). In order to readily detect a sample point, which will be discussed later, the input analog signal is converted to digital data by the A/D converter 2 after the LPF1 removes noise. At this moment, the A/D converter 2 performs A/D conversion according to an input clock CK0 having a predetermined frequency (e. g. 44.1KHz) and converts the input analog signal to, for example, a digital data of 16 bits.

Speech data digitized by the A/D converter 2 is inputted to the data generating section 3. The data generating section 3 differentiates digital data supplied from the A/D converter 2 and detects a sample point, which will be discussed later, according to the differentiation result. And then, the data generating section 3 obtains and outputs amplitude data, which is indicative of amplitude of digital data on each sample point, and timing data (the number of clocks CK0), which is indicative of a time interval between sample points.

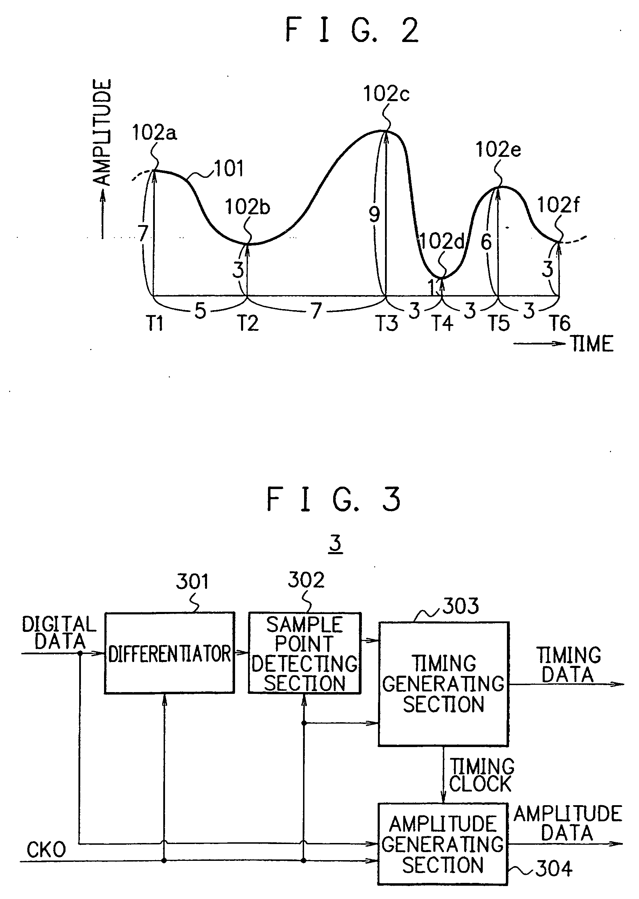

FIG. 2 is a diagram for explaining a principle of data generation performed by the data generating section 3. Additionally, data inputted to the data generating section 3 is digital data obtained after an input analog signal undergoes A/D conversion. In FIG. 2, a waveform of digital data outputted from the A/D converter 2 is shown in an analog form for explanation. Further, values shown in FIG. 2 are presented for explanation but are not actual values.

In the present embodiment, for example, from digital data 101 outputted from the A/D converter 2, points (referred to as sample points) 102a to 102f are detected, on which differentiating absolute values (inclination of a signal) are at predetermined values or lower including "0". And then, digital data values indicative of amplitude on the sample points 102a to 102f and timing data values indicative of time intervals of the sample points 102a to 102f are obtained, and a pair of an amplitude data value and a timing data value is outputted.

In the example of FIG. 2, as digital amplitude data values on the sample points 102a to 102f, "7,3,9,1,6,3" are obtained. As timing data indicative of time intervals between time T1 and T2, T2 and T3, T3 and T4, T4 and T5, and T5 and T6 of the sample points 102a to 102f, "5,7,3,3,3" are obtained. Besides, values presented as timing data show the number of clocks CK0 according to a certain sampling frequency.

At time T1, an amplitude data value "7" on the sample point 102a and a timing data value (not shown) are obtained. The timing data value is indicative of a time interval from when a previous sample point (not shown) is detected. Hence, a pair of the data values is outputted as data of time T1.

Next, at time T2 when the sample point 102b is detected, a timing data value "5", which is indicative of a time interval from time T1 having the sample point 102a detected previously, and an amplitude data value "3" on the sample point 102b are obtained. Thus, a pair of the data values(5,3) is outputted as data of time T2.

Moreover, at time T3 when the sample point 102c is detected, a timing data value "7", which is indicative of a time interval from time T2 having the sample point 102b detected previously, and an amplitude data value "9" on the sample point 102c are obtained. Thus, a pair of the data values (7,9) is outputted as data of time T3.

In this manner, pairs of (3,1), (3,6), and (3,3), which include timing data values indicative of time intervals between time T3 and T4, T4 and T5, and T5 and T6, and amplitude data values on the sample points 102d, 102e, and 102f detected at time T4, T5, and T6, are outputted as data of time T4, T5, and T6.

FIG. 3 is a block diagram showing an example of the configuration of the data generating section 3. In FIG. 3, a differentiator 301 differentiates digital data, which is inputted from the A/D converter 2, on each sampling point, 'and obtains an absolute value and outputs it to a sample point detecting section 302. The sample point detecting section 302 detects a sample point whose a differentiating absolute value of digital data is at a predetermined value or lower based on the differentiation results of the differentiator 301.

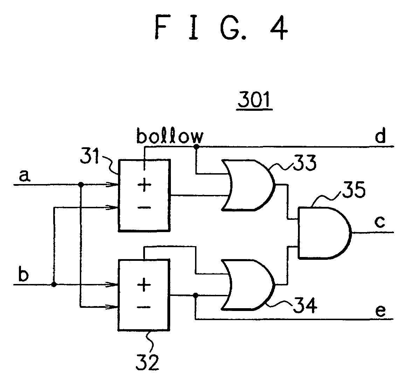

FIG. 4 is a diagram showing an example of the configuration of the differentiator 301. As shown in FIG. 4, the differentiator 301 of the present embodiment is composed of differentiating absolute value circuits for computing a differentiating absolute value between pieces of data on successive two sampling points.

In FIG. 4, differentiators 31 and 32 respectively compute differentiatings between pieces of data on successive two sampling points, the data being inputted from nodes a and b. Namely, the differentiator 31 computes a differentiating a-b, and the differentiator 32 computes a differentiating b-a. The results are respectively outputted to OR circuits 33 and 34. The differentiators 31 and 32 output a value of "1" as a bollow in addition to differentiating values when computed differentiating values are negative.

The OR circuit 33 ORs a differentiating value and a bollow output that are computed in the differentiator 31, and outputs the results to an AND circuit 35. Moreover, the other OR circuit 34 ORs a differentiating value and a bollow output that are computed in the differentiator 32, and outputs the results to the AND circuit 35. The AND circuit 35 ANDs the outputs from the two OR circuits 33 and 34 and outputs the results to a node c. Also, a bollow output of the differentiator 31 is outputted to a node d, and a differentiating value computed in the differentiator 32 is outputted to a node e.

Therefore, a differentiating absolute value |a-b| of data on successive two sampling points is outputted to the node c, a value of "1" is outputted to the node d when a data value of the node b is larger than that of the node a, and a differentiating value b-a between pieces of data of the nodes a and b is outputted to the node e.

Besides, for explanation, FIG. 4 shows only one-bit data lines of the nodes a, b, c, and e. Actually, data lines equivalent to the number of bits are provided.

The timing generating section 303 of FIG. 3 counts the number of clocks CK0 supplied from when a sample point is detected to when a subsequent sample point is detected. Further, the timing generating section 303 outputs the number as timing data and outputs a timing clock indicative of timing of a detected point on each sample point.

Moreover, an amplitude generating section 304 takes out only digital data on the corresponding sample point and outputs the data as amplitude data, according to a timing clock outputted from the timing generating section 303. A pair of amplitude data and timing data is outputted to the correlating section 4 of FIG. 1. The amplitude data is generated thus by the amplitude generating section 304 on each point, and the timing data is generated by the timing generating section 303 and is indicative of a time interval between sample points.

The correlating section 4 computes correlation of each amplitude data and each timing data that are outputted from the data generating section 3. As a method for a correlating operation, a variety of methods are applicable. It is assumed that a ratio of pieces of amplitude data and a ratio of pieces of timing data are computed. The amplitude data and the timing data are outputted from the data generating section 3. For example, when d1, d2, d3, d4, ... are obtained as amplitude data, and t1, t2, t3, t4 ... are obtained as timing data, the correlating section 4 computes ratios represented in the following equations (1a) and (1b).

$$d2/d1, \; d3/d2, \; d4/d3, \qquad (1a)$$

$$t2/t1, \; t3/t2, \; t4/t3, \qquad (1b)$$

The mode designating section 8 designates a mode for registering correlation data, which is generated by the correlating section 4, in the data memory 6 as matching data used for speech recognition, or a mode for actual speech recognition using kinds of matching data registered in the data memory 6.

The data registering section 5 registers correlation data, which is generated by the correlating section 4, in the data memory 6 as matching data when the mode designating section 8 designates a registering mode.

The data memory 6 is a recording medium for storing data. The data memory 6 captures and records correlation data generated by the correlating section 4 in a mode for registering correlation data (matching data). Also, in a speech recognition mode, in response to a request from the data matching section 7, the data memory 6 reads and outputs stored correlation data (matching data).

The data matching section 7 performs pattern matching using correlation data outputted from the correlating section 4 and matching data read from the data memory 6, and the data matching section 7 detects matching data, which corresponds to correlation data of the correlating section 4 with a certain probability or more, from plural pieces of matching data stored in the data memory 6. Thus, it is recognized that speech inputted from a microphone and the like (not shown) corresponds to the detected matching data, and the recognition result is outputted to a data processing section and the like (not shown). Hence, processing is carried out according to the content of recognized speech in the data processing section.

As described above, in the speech recognition device of the present embodiment, human speech is inputted as an analog signal when matching data is registered, and the analog signal is digitized and computed. Thus, a sample point is detected, on which a differentiating absolute value of digital data is at a predetermined value or lower. And then, correlation data regarding amplitude data on the sample point and correlation data regarding timing data indicative of a timing interval between sample points are generated, and the pieces of correlation data are registered as matching data in a recording medium such as the data memory 6.

Further, during speech recognition, human speech is processed in the same manner to generate correlation data of amplitude data and correlation data of timing data. And then, identification and so on is made on inputted speech by pattern matching, which use correlation data generated thus and plural pieces of matching data registered in advance in the data memory 6.

Hence, amplitude data and timing data generated by the data generating section 3 are unique data varying with the content of inputted speech. Therefore, speech recognition can be made on inputted speech and so on by pattern matching, which uses correlation data generated from amplitude data and timing data.

Additionally, in the present embodiment, amplitude data and timing data generated in the data generating section 3 are not directly used as matching data. Instead, correlation data having ratios of the data is used as matching data. Hence, it is possible to improve a speech recognition rate.

In other words, even when the same words are vocalized, an amplitude data value and a timing data value may vary according to loudness and speed of speech. Therefore, in the case where amplitude data and timing data are directly used as matching data, even when the same words are vocalized, the speech may be recognized as different speech under some vocalizing conditions.

In contrast, in the present embodiment, ratios of amplitude data and ratios of timing data are computed and used as matching data, so that even when loudness and speed of speech are varied as a whole, a changing ratio of an amplitude value is substantially constant on each sample point and a changing ratio of a pitch is substantially constant between sample points. Hence, it is possible to accurately recognize speech. Thus, for example, a specific word is used as a speech command to operate a calculator, a portable terminal, and so on with speech.

Additionally, in the correlating section 4 of the present embodiment, a ratio of two successive pieces of amplitude data and a ratio of two successive pieces of timing data are computed respectively as shown in equations (1a) and (1b). The computation of correlation data is not limited to the above example. For example, in a ratio computation shown by equations (1a) and (1b), a denominator and a numerator may be reversed. Further, instead of a ratio between two successive pieces of data, a ratio may be computed on remote pieces of data.

Also, although a ratio between two pieces of data is computed by division in the present embodiment, a correlation value may be computed by addition, subtraction, multiplication, or an arbitrary combination of them. Furthermore, in addition to correlation using two pieces of data, correlation using more pieces of data is also applicable.

Besides, in the present embodiment, although a correlation value of amplitude data and a correlation value of timing data are computed in a separate manner, a correlation value between amplitude data and timing data may be computed.

Namely, a method of correlation computation is not particularly limited as long as the same speech is caused to have substantially equal values by correlation computation under any vocalizing conditions. Of course, some methods of correlation computation can further improve a speech recognition rate.

Additionally, even when correlation is not computed, a speech recognition rate can be improved to a degree by adjusting a boundary value, which determines if speech is the same or not during pattern matching of the data matching section 7, that is, a threshold value regarding a matching degree for matching data.

Further, for example, the fractional portion of computed ratio data may be dropped by further rounding a lower-order bit of correlation data, which is computed by the correlating section 4. Moreover, during the rounding operation, computed correlation data may be firstly multiplied by several times before a lower-order bit is rounded.

Therefore, pattern matching can be carried out while a lower-order bit is ignored as for correlation data, which may slightly vary under some vocalized conditions of the same speech, and it is possible to improve a matching rate between correlation data, which is outputted from the correlating section 4, and matching data read by the data memory 6, thereby further increasing a speech recognition rate.

Besides, instead of directly using a series of correlation data, which is obtained by the correlating section 4, for pattern matching, some pieces on the front and the end of the series of correlation data may not be used for pattern matching. Or regarding a series of amplitude data and timing data that are obtained by the data generating section 3, some pieces of on the front and the end of amplitude data and timing data may not be used for obtaining correlation data.

When human speech is processed to detect amplitude data and timing data on each sample point, obtained amplitude data and timing data may be incorrect on the front and the end of the speech. Thus, unreliable amplitude data and timing data that are generated on the front and the end of speech or correlation data generated thereafter are removed before pattern matching, thereby further improving a speech recognition rate.

Also, in the data generating section 3 of the present embodiment, a point where digital data has a differentiating absolute value of a predetermined value or lower including "0" is detected as a sample point from data generated by digitizing an input analog signal. Detection of a sample point is not limited to the above method. For example, from a series of digital data supplied from the A/D converter 2, a position where a differentiating absolute value is smaller than those of the forward and backward positions, that is, a position of a minimum differentiating absolute value may be detected as a sample point.

In this case, as processing for detecting a sample point, double differentiation is performed as follows: after digital data supplied by the A/D converter 2 is differentiated once, an obtained absolute value is further differentiated. A point just before a double differentiating value changes in polarity from negative or 0 to positive may be detected as a sample point. Further, from points extracted thus based on polarity of double differentiating values, only a point where a first differentiating absolute value is smaller than a fixed value may be detected as a sample point.

In other words, on a minimum point of a differentiating absolute value obtained by first differentiation, a double differentiating value, which is obtained by further differentiating a first differentiating absolute value, always changes in polarity from negative to positive. Thus, when a double differentiating value of digital data is computed and a point where polarity changes from negative to positive (including a point having a double differentiating value of 0) is detected, a minimum point of a first differentiating absolute value can be detected accurately. At this moment, even when two successive minimum points appear with equal values, one of them can be positively detected as a sample point. Moreover, when only a point where a first differentiating absolute value is below a fixed value is detected as a normal sample point, unnecessary points cannot be detected as sample points.

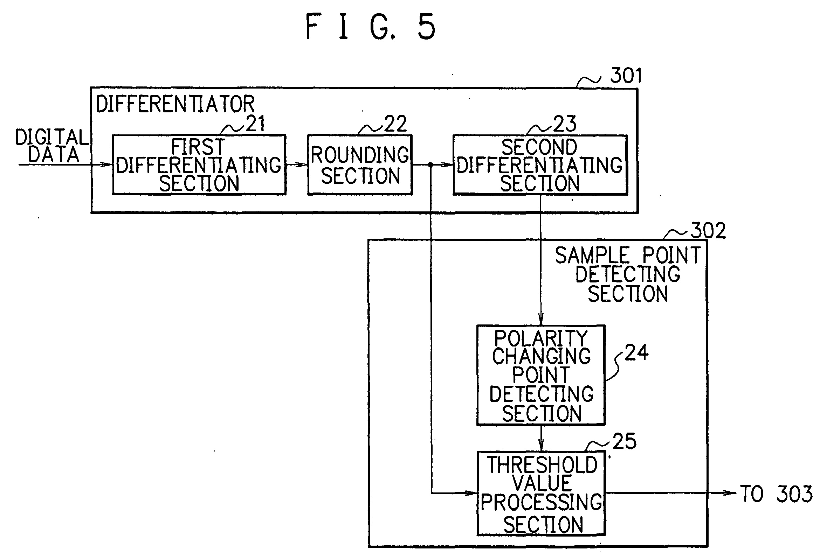

FIG. 5 is a block diagram showing an example of the 'configuration for detecting a sample point by performing the above double differentiation. FIG. 5 shows examples of the configurations of the differentiator 301 and the sample point detecting section 302 that are shown in FIG. 3.

As shown in FIG. 5, the differentiator 301 is provided with a first differentiating section 21, a rounding section 22, and a second differentiating section 23. Additionally, the sample point detecting section 302 is provided with a polarity changing point detecting section 24 and a threshold value processing section 25.

The first differentiating section 21 is configured as shown in FIG. 4. The first differentiating section 21 differentiates digital data supplied from the A/D converter 2 for each sampling point and computes and outputs an absolute value of the data. The rounding section 22 drops a lower-order bit of a first differentiating absolute value computed by the first differentiating section 21. This processing is performed for providing a margin on determination if a point is a sample point or not when a sample point is detected based on a differentiating absolute value computed by the differentiator 301.

For example, when one bit of a lower order is dropped, determination can be made on the assumption that a differentiating absolute value is always 0 when an actually computed differentiating absolute value ranges from 0 to 1. Also, when two bits of a lower order are dropped, determination can be made on the assumption that a differentiating absolute value is always 0 when an actually computed differentiating absolute value ranges from 0 to 3. Here, three bits of a lower order are dropped by dividing the above first differentiating absolute value by eight. With this operation, it is possible to avoid influence of slight change such as noise, and unnecessary points are not detected as sample points.

Data outputted from the rounding section 22 is supplied to the second differentiating section 23 and the threshold value processing section 25 in the sample point detecting section 302. The second differentiating section 23 is also configured as shown in FIG. 4 and further differentiates a first differentiating absolute value, which is rounded by the rounding section 22, for each sampling point. A double differentiating value computed by the second differentiating section 23 and a bollow value indicative of its polarity are supplied to the polarity changing point detecting section 24 in the sample point detecting section 302.

As a candidate of a sample point, the polarity changing point detecting section 24 extracts a point just before a double differentiating value supplied from the second differentiating section 23 in the differentiator 301 changes in polarity from negative to positive, for example, the last negative point when double differentiating values being negative in polarity are successively obtained, or a point on which a double differentiating value is 0. When double differentiating values are not successively obtained with negative polarity, the corresponding negative point may be further extracted as a candidate of a sample point.

Incidentally, when the rounding section 22 drops a lower-order bit of a differentiating absolute value to provide a margin for detecting a sample point, two equal minimum values may appear successively. In this case as well, by computing a double differentiating value and detecting a point where polarity changes from negative to positive (including a double differentiating value of 0), one of the minimum points having an equal value can be positively detected as a sample point.

Besides, when two equal minimum values appear successively, the polarity of a differentiating value may be determined based on a bollow value of the differentiator 31, the bollow value being outputted to the node d of FIG. 4, and a point on which a differentiating value changes in polarity may be detected as a sample point.

Furthermore, when a differentiating value does not change in polarity, in view of the relationship of magnitude between differentiating absolute values on sampling points disposed before and after two successive sampling points having equal values, a point closer to a smaller value may be detected as a sample point.

The threshold processing section 25 compares a first differentiating absolute value supplied from the rounding section 22 and a predetermined threshold value, regarding candidates of sample points that are extracted from the polarity changing point detecting section 24. The threshold processing section 25 detects as a normal sample point only a point where a first differentiating absolute value is smaller than a threshold value and transmits the point to the timing generating section 303 of FIG. 3.

Additionally, in the example of FIG. 5, a threshold value is processed by using a first differentiating absolute value rounded by the rounding section 22. A threshold value may be processed using a first differentiating absolute value computed by the first differentiating section 21 before rounding. Further, in FIG. 5, a point just before a double differentiating value changes in polarity from negative to positive is extracted as a sample point. A point just after polarity changes from negative to positive may be extracted as a sample point.

Also, as another method for detecting a sample point, a sample point may be detected according to a differentiating value including polarity, without using a differentiating absolute value. For example, digital data outputted from the A/D converter 2 is differentiated once and a point where a differentiating value changes in polarity can be detected as a sample point. In this case, the differentiator 301 of FIG. 3 differentiates for one time digital data inputted from the A/D converter 2. At this moment, the differentiator 301 differentiates digital data every time an input clock CK0 with a predetermined frequency is supplied. A differentiating value is determined by subtracting previous data from current data captured at a timing of an input clock CK0. In this case, a portion having no data is designated as a default value.

Additionally, digital data outputted from the A/D converter 2 as well as a differentiating value computed by the differentiator 301 is inputted to the sample point detecting section 302. And then, based on the data, a point where a differentiating value of digital data changes in polarity is detected as a sample point.

For example, the sample point detecting section 302 firstly detects a point where a differentiating value changes in polarity from positive to negative, a point where a differentiating value changes in polarity from negative to positive, and a point where a differentiating value is 0. And then, regarding a point where a differentiating value changes in polarity from positive to negative, a point having a larger digital data value from the A/D converter 2 is detected as a sample point, from both positive and negative points. In addition, regarding a point where a differentiating value changes in polarity from negative to positive, a point having a smaller digital data value from the A/D converter 2 is detected as a sample point, from both positive and negative points. Beside, regarding a point where a differentiating value is 0, the point is detected as a sample point. Further, when two points where a differentiating value is 0 appear successively, for example, the positions of both ends are detected as sample points.

The timing generating section 303 counts the number of clocks CK0 supplied from when a sample point is detected to when a subsequent sample point is detected. The timing generating section 303 outputs the number as timing data and outputs a timing clock indicative of timing of a detected point on each sample point.

Moreover, according to a timing clock outputted from the timing generating section 303, the amplitude generating section 304 takes out only digital data on the corresponding sample point and outputs the data as amplitude data.

The following will discuss a speech synthesis device of the present embodiment.

In the speech synthesis device of the present embodiment, text data indicative of predetermined words or sentences and so on is in association with a pair of amplitude data and timing data that are generated from an aural signal corresponding to the words or sentences by processing performed in or before the data generating section 3 of the speech recognition device shown in FIG. 1.

And then, when speech is synthesized and outputted from designated text data, interpolation data for interpolating pieces of amplitude data is generated by performing interpolation, which will be discussed later, using amplitude data and timing data that are associated with the text data, and the interpolation data is subjected to D/A conversion and outputted.

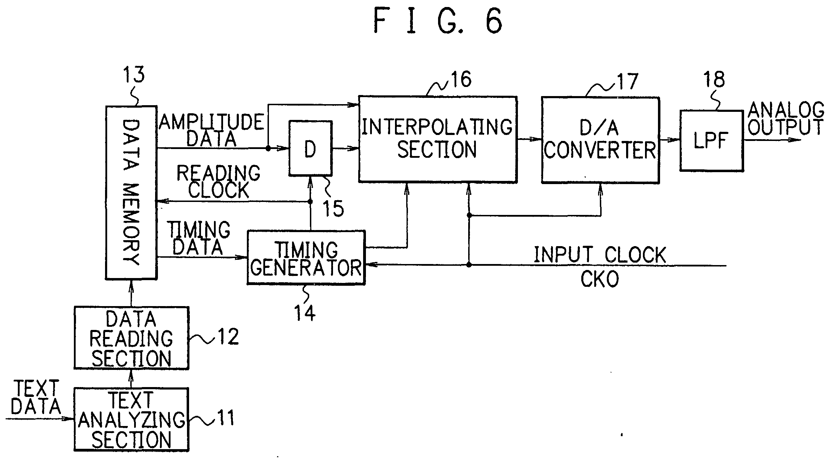

FIG. 6 is a block diagram showing an example of the configuration of the speech synthesis device according to the present embodiment. As shown in FIG. 6, the speech synthesis device of the present embodiment is constituted by a text analyzing section 11, a data reading section 12, a data memory 13, a timing generator 14, a D-type flip flop 15, an interpolating section 16, a D/A converter 17, and an LPF 18.

The data memory 13 stores a pair of amplitude data and timing data in association with text data. The amplitude data and timing data are generated from speech corresponding to the text data indicative of varied syllables, words, sentences and so on. The stored amplitude data and timing data are generated by the same processing performed in and before the data generating section 3 of the speech recognition device shown in FIG. 1.

Additionally, in this case, amplitude data and timing data generated from speech corresponding to text data are stored in association with the text data. Amplitude data and timing data generated from speech (e. g., commentary) corresponding to data other than text may be stored in association with the data. The data other than text includes an icon, CG data, and picture data.

The text analyzing section 11 analyzes designated and desired text data and recognizes the content including syllables, words, and sentences. Besides, when an icon, CG data, picture data and so on are designated, the text analyzing section 11 analyzes them to recognize what is designated. The data reading section 12 reads from the data memory 13 amplitude data and timing data that correspond to the content such as designated text data, based on the analytical results of the text analyzing section 11.

In response to timing data read from the data memory 13, the timing generator 14 generates a reading clock, which is indicative of an irregular time interval indicated by the timing data, from an input clock CK0 having a predetermined frequency. The D-type flip flop 15 successively captures and retains amplitude data, which is stored in the data memory 13 in combination with the timing data, at timing according to a reading clock generated by the timing generator 14, and the D-type flip flop 15 outputs the amplitude data to the interpolating section 16.

Amplitude data on an input/output stage of the D-type flip flop 15, that is, amplitude data retained in the D-type flip flop 15 at timing of a reading clock and amplitude data to be retained in the D-type flip flop 15 at timing of a subsequent reading clock (two pieces of amplitude data on two successive sample points) are inputted to the interpolating section 16.

The interpolating section 16 generates digital interpolation data between sample points according to interpolation or convolution and so on, which will be discussed later, by using two pieces of amplitude data inputted thus and timing data inputted from the timing generator 14. And then, digital interpolation data generated thus is converted into an analog signal by the D/A converter 17. Thereafter, the data is outputted as an analog synthetic aural signal via the LPF 18.

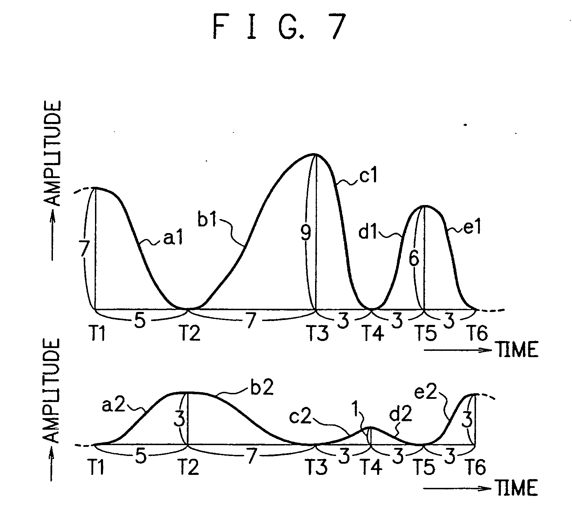

Subsequently, referring to FIG. 7, the following will discuss a principle of data interpolation performed in the interpolating section 16. When a pair of amplitude data and timing data is stored in the data memory 13, the amplitude data and timing data being generated by performing the same processing as the data generating section 3 of FIG. 1 on an aural signal shown in FIG. 2, the data includes a numeral series of (*,7), (5,3), (7,9), (3,1), (3,6), and (3,3). Here, * indicates that no value is shown in FIG. 2. Data is read from the data memory 13 in this order.

Namely, first, from two data values of an amplitude data value "7" and a timing data value "5" that are read from the data memory 13, data of a waveform a1 is generated by interpolation. Next, from two data values of the above timing data value "5" and an amplitude data value "3", which is read subsequently, data of a waveform a2 is generated by interpolation.

Next, from two data values of the above amplitude data value "3" and a timing data value "7", which is read subsequently, data of a waveform b2 is generated by interpolation. Moreover, from the above timing data value "7" and an amplitude data value "9", which is read subsequently, data of a waveform b1 is generated by interpolation. In this manner, data of waveforms c1, c2, d2, d1, e1, and e2 is successively generated from the combinations of amplitude data values and timing data values that are read in order.

With the above processing, a digital signal having continuous waveforms a1, b1, c1, d1 and e1 (upper stage of FIG. 7) and a digital signal having continuous waveforms a2, b2, c2, d2, and e2 (lower stage of FIG. 7) are generated. And then, two digital signals generated thus are added to each other and are subjected to digital-analog conversion, so that an analog aural signal with a waveform of FIG. 2 is synthesized.

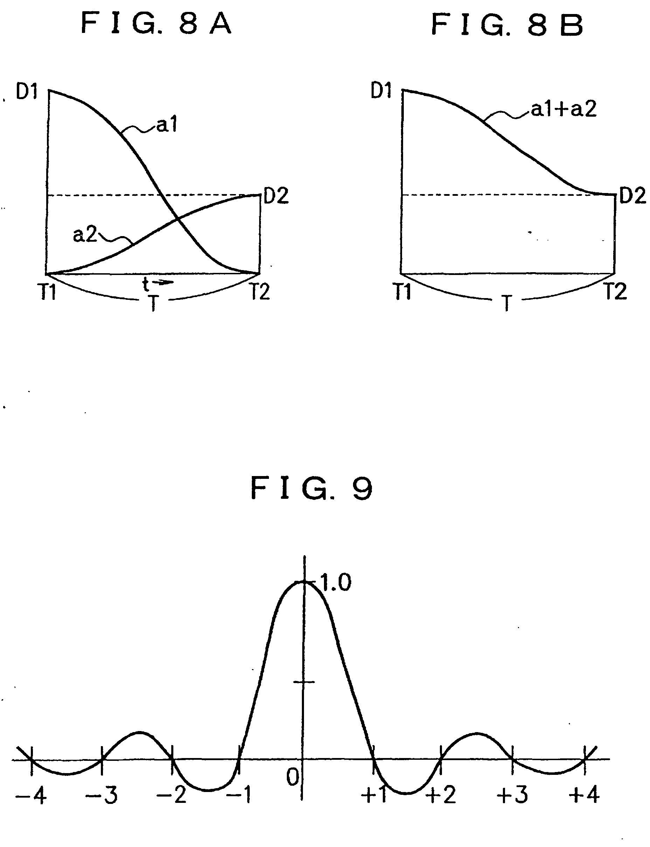

FIG. 8A and 8B show a section between time T1 and T2 of FIG. 7. FIG. 8A shows two waveforms a1 and a2 before addition. FIG.8B shows a synthetic waveform a1+a2 generated by addition.

In FIG. 8A, reference numeral D1 denotes an amplitude data value at time T1 ("7" in the example of FIG. 7), reference numeral D2 denotes an amplitude data value at time T2 ("3" in the example of FIG. 7), reference character T denotes a timing data value indicative of a time interval between time T1 and T2("5" in the example of FIG. 7), and reference character t denotes arbitrary timing between time T1 and T2.

As shown in FIG. 8A, data of the waveform a1 is generated by interpolation, which uses an amplitude data value D1 at time T1 and a timing data value T indicative of a time interval between time T1 and T2 while arbitrary timing t between time T1 and T2 is used as a variable, namely, while a value of timing t is incremented one by one according to a clock CK0 based on a certain sampling frequency.

Further, data of the waveform a2 is generated by interpolation, which uses an amplitude data value D2 at time T2 and a timing data value T indicative of a time interval between time T1 and T2 while timing t is used as a variable in the above manner.

And then, the waveform in FIG. 8B is synthesized by adding data of the waveforms a1 and a2 generated thus while the timing t is used as a variable.

The following will discuss a principle of synthesizing an aural signal by the above interpolation.

Generally, in order to obtain a continuous analog signal from discrete digital data, interpolation is performed between pieces of digital data, which is inputted in a discrete manner, so as to artificially increase a sampling frequency. Normally, such data interpolation is performed using a predetermined sampling function.

FIG. 9 shows a sinc function as an example of a sampling function. In the example of a sinc function shown in FIG. 9, a value is set at "1" only on a sampling point of t=0, and a value is always set at "0" on the other sampling points (t = ?1, ?2, ?3, ?4,...) having constant intervals.

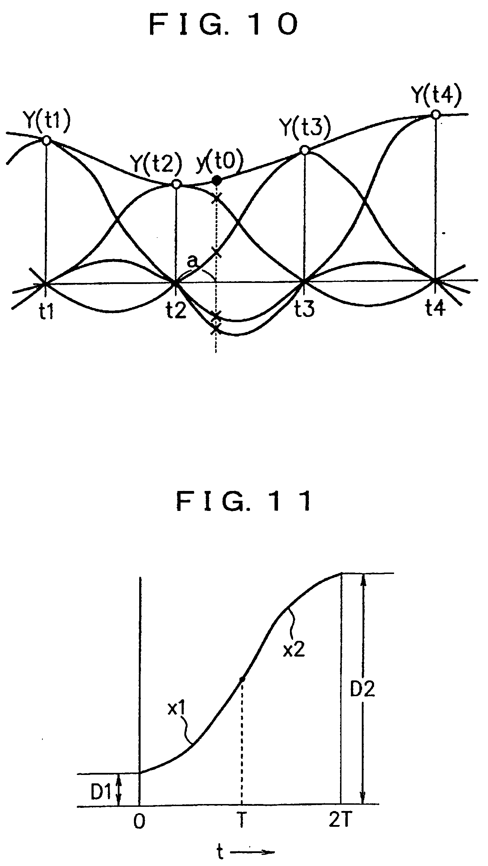

FIG. 10 is a diagram for explaining an operation of typical data interpolation using such a sampling function. In FIG. 10, sampling points t1, t2, t3, and t4 at constant intervals respectively have discrete data values of Y(t1), Y(t2), Y(t3), and Y(t4). For example, it is assumed that an interpolation value y is obtained which corresponds to a predetermined position t0 (distance a from t2) between the sampling points t2 and t3.

In general, in order to obtain an interpolation value y by using a sampling function, a value of a sampling function on the interpolating position t0 is computed for each piece of supplied discrete data, and a convoluting operation is performed using the value. To be specific, on each sampling point of t1 to t4, the center of the sampling function is caused to have a constant peak height, a value of the sampling function (indicated by ? ) is obtained on each interpolating position t0, and all the values are added.

Such interpolation is performed with time (with increment of a sampling clock) while the interpolating position t0 is sequentially moved, so that an interpolation value y(t0) changing continuously is obtained in a sequential manner. Thus, it is possible to obtain a digital waveform for connecting pieces of discrete data more smoothly. A continuous analog signal can be obtained by performing D/A conversion on the waveform.

The present embodiment applies such data interpolation. Namely, as shown in FIG. 8A, out of an amplitude data value D1 (=7) and a timing data value T (=5) that have been already inputted at time T2, the waveform a1 is obtained, which forms a part of a sampling function having a value other than "0" on a first sample point (time T1). Further, out of an amplitude data value D2 (=3) and a timing data value T (=5), the waveform a2 is obtained, which forms a part of a sampling function having a value other than "0" on a second sample point (time T2).

And then, values of the waveforms a1 and a2 are added on each interpolating position t, which is sequentially moved with time. Thus, it is possible to obtain a digital waveform for connecting discrete data D1 and D2 more smoothly. The digital waveform is subjected to D/A conversion so as to obtain a continuous analog signal.

Incidentally, in the present embodiment, as shown in FIG. 2, discrete data is obtained by sampling digital data at a time interval of a point where a differentiating absolute value is at a predetermined value or lower. Therefore, sample points where discrete data are obtained do not always have constant intervals. In many cases, the intervals are irregular (in the example of FIG. 2 as well, the sample points have irregular intervals of "5,7,3,3,3").

Hence, in the speech synthesis device, for example, when an interpolation value between time T1 and T2 is obtained, as shown in FIG. 8, the above convoluting operation is performed using only the sampling functions a1 and a2 at a time interval between sample points of time T1 and T2. Other sampling functions b1, b2, c1, c2, d1, d2, e1, and e2 having different time intervals between sample points are not considered when the convoluting operation is performed.

Moreover, for example, when an interpolation value between time T2 and T3 is obtained, the convoluting operation is performed using only the sampling functions b1 and b2 at a time interval (=7) between sample points of time T2 and T3. Other sampling functions a1, a2, c1, c2, d1, d2, e1, and e2 having different time intervals between sample points are not considered when the convoluting operation is performed. The same operation is performed when interpolation values between other sample points are obtained.

Subsequently, the following will discuss a specific example of the data interpolation. As described above, for example, when an interpolation value between time T1 and T2 is obtained, only the sampling functions a1 and a2 are used, which are obtained from amplitude data values at time T1 and T2 and a timing data value indicative of a time interval between time T1 and T2. Namely, data required for obtaining an interpolation value on each interpolating position t between time T1 and T2 is all obtained at time T2. At this point, it is possible to synthesize a signal illustrated in FIG. 8B.

Therefore, in the present embodiment, every time two amplitude data values D1 and D2 and a timing data value T, which is indicative of a time interval, are obtained for each of discrete time T1 to T6, an interpolation value is computed using the data values according to interpolating equations, which will be discussed later. Thus, a digital waveform is sequentially synthesized. FIG.11 is a diagram for explaining the interpolating equations.

As shown in FIG. 11, an interpolation value between two sample points having the amplitude data values D1 and D2 is represented by a function, which connects at an intermediate point two quadratic functions x1 and x2 relating to an interpolating position t. In other words, in the present embodiment, a part between two sample points is divided into a first half and a second half, and interpolation values thereof are computed respectively by the quadratic functions x1 and x2.

Here, a timing data value T, which is a time interval between sample points, may be an odd number and an even number. In the case of an odd number, an interpolating position t is not brought to an intermediate position. Therefore, an obtained timing data value may be always set at an even number by performing double oversampling when amplitude data and timing data are generated. In this case, the five timing data values "5, 7, 3, 3, 3" of FIG. 2 are actually stored in the data memory 13 as values of "10, 14, 6, 6, 6" by double oversampling. In FIG. 11, a time interval between sample points is presented by 2T after oversampling.

In FIG. 11, the two quadratic functions x1 and x2 are presented by the following equations.

$$x1 = D1 + at^2 \qquad (1)$$

$$x2 = D2 - a(t - 2T)^2 \qquad (2)$$

Further, since the functions x1 and x2 are connected at the intermediate point T of the successive sample points, the following equation is established.

$$x1 = x2 \ (t = T) \qquad (3)$$

Here, when equations (1) and (2) are substituted into equation (3), the following equation is established.

$$D1 + aT = D2 - aT^2 \qquad (4)$$

When the equation is solved for a, the following equation is established.

$$a = -(D1 - D2)/2T^2 \qquad (5)$$

Therefore, the following equations are obtained by substituting equation (5) into equations (1) and (2).

$$x1 = D1 - \{(D1 - D2)/2T^2\}t^2 \qquad (6)$$

$$x2 = D2 + \{(D1 - D2)/2T^2\}(2T - t)^2 \qquad (7)$$

Namely, the above equations (6) and (7) are performed while an interpolating position t is used as a variable, which is incremented sequentially according to a clock of a sampling frequency doubled from an original frequency. Thus, it is possible to synthesize a digital waveform for more smoothly connecting pieces of original discrete data. In the present embodiment, such an interpolating operation is performed sequentially every time a signal line including amplitude data values and timing data values is inputted at discrete time T1 to T6.

Namely, in the example of FIG. 7, when amplitude data values on the sample points of time T1 and T2 and a timing data value therebetween are inputted, an interpolating operation is performed between the sample points to immediately synthesize a smooth digital waveform. Further, when an amplitude data value on the sample point of time T3 and a timing data value between the sample points T2 and T3 are inputted, an interpolating operation is performed therebetween to immediately synthesize a smooth digital waveform. In this manner, the above operation is performed sequentially.

As described above, in the present embodiment, amplitude data on each sample point and timing data indicative of an interval between the sample points are associated with text data. The amplitude data and timing data are generated from real speech. When desired text data is designated, an analog speech signal is synthesized from corresponding amplitude data and timing data by an interpolating operation, and then, the signal is outputted. Therefore, as compared with a method for synthesizing (reproducing) speech by using a previously recorded aural signal, it is possible to synthesize high-quality speech close to human speech from text data and so on just by storing an extremely small amount of data (amplitude data and timing data). Moreover, read data can be successively processed by a simple interpolating operation to synthesize speech, thereby achieving a real-time operation.

Besides, the interpolating operation shown in the above equations (6) and (7) can be realized by a hardware structure such as a logic circuit and by a DSP (Digital Signal Processor) or software (program stored in ROM, RAM, and the like).

(Embodiment 2)

The following will discuss Embodiment 2 of the present invention.

In Embodiment 2, in a speech recognition device, at least in a step before a data generating section 3 generates amplitude data and timing data, n-times oversampling and a moving average operation or a convoluting operation (hereinafter, referred to as convolution) are performed on supplied digital data so as to obtain more smooth data in which pieces of discrete data are connected by interpolation.

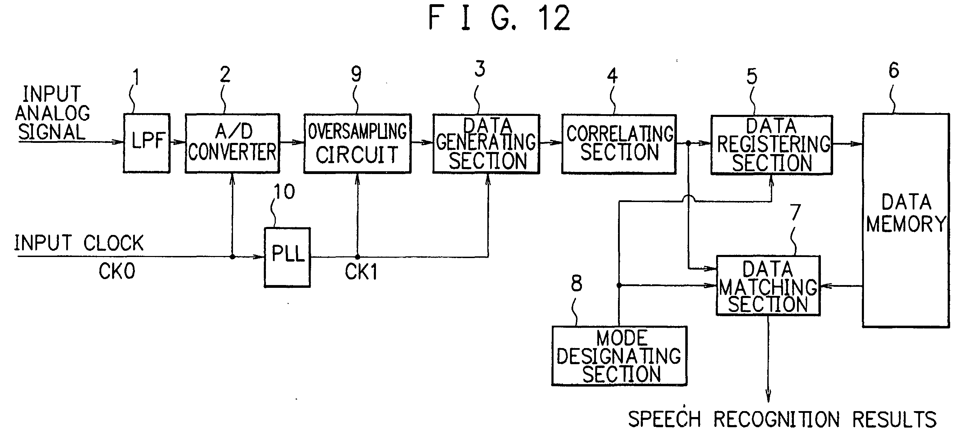

FIG. 12 is a block diagram showing an example of the entire configuration of the speech recognition device according to Embodiment 2. As shown in FIG. 12, in the speech recognition device of Embodiment 2, an oversampling circuit 9 and a PLL (Phase Locked Loop) circuit 10 are added to the speech recognition device of Embodiment 1 shown in FIG. 1.

The oversampling circuit 9 is provided between an A/D converter 2 and the data generating section 3 and performs n-times oversampling and convolution on digital data, which is inputted from the A/D converter 2, so as to compute a digital interpolation value connecting pieces of discrete data. For example, the oversampling circuit 9 inputs speech data sampled at a frequency of 44.1 KHz, performs oversampling on the data at an eightfold frequency (352.8KHz), and performs convolution. And then, the oversampling circuit 9 outputs a series of oversampled data obtained thus to the data generating section 3.

The data generating section 3 detects sample points by any one of the above methods from a series of oversampled data supplied from the oversampling circuit 9. And then, a pair of an amplitude data value on each of the detected sample points and a timing data value indicative of a time interval of the sample points is outputted to a data registering section 5 or a data matching section 7 according to a mode designated by a mode designating section 8.

Further, the PLL circuit 10 generates a clock CK1 having an eightfold frequency (352.8 KHz) from an input clock CK0 having a reference frequency (e.g., 44.1 KHz) and supplies the clock CK1 to the above oversampling circuit 9 and the data generating section 3. The oversampling circuit 9 and the data generating section 3 operate in synchronization with the clock CK1 having an eightfold frequency.

Meanwhile, in a speech synthesis device, when a data memory 13 stores amplitude data and timing data that are generated according to the clock CK1 having an eightfold frequency, a clock generator (not shown) needs to be added to the speech synthesis device of Embodiment 1 shown in FIG. 6.

The clock generator generates a clock CK1 having an eightfold frequency from an input clock CK0 having a reference frequency and outputs the clock CK1 to a timing generator 14, an interpolating section 16, and a D/A converter 17.

And then, the following will discuss in detail the configuration and the operations of the oversampling circuit 9 in the speech recognition device shown in FIG. 12.

In the oversampling circuit 9 of the present embodiment, when an interpolation value is computed between two pieces of discrete data, each piece of digital data of a basic waveform undergoes oversampling. The waveform has amplitudes corresponding to n pieces of discrete data values including the two pieces of discrete data. Further, the obtained n pieces of data are synthesized with one another by convolution so as to digitally compute an interpolation value connecting the two pieces of discrete data.

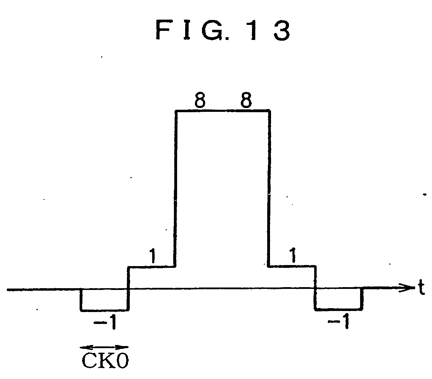

FIG. 13 is an explanatory drawing showing a digital basic waveform used in the present embodiment. The digital basic waveform in FIG. 13 is a basic sampling function, which is used when data is interpolated by oversampling. The digital basic waveform is formed by changing a data value to -1, 1, 8, 8, 1, and -1 for each clock (CK0) of a reference frequency.

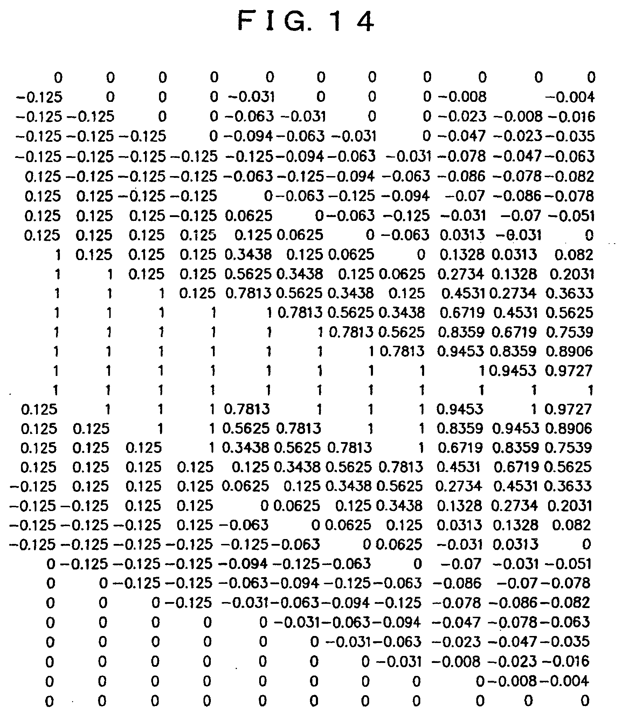

Referring to FIG. 14, the following will discuss a principle of data interpolation according to the present embodiment, by taking as an example the case where an interpolation value is generated by n-times oversampling and convolution from discrete data values (-1, 1, 8, 8, 1, -1)/8, which correspond to a normalized digital basic waveform shown in FIG. 13. Besides, although FIG. 14 shows an example of quadruple oversampling in consideration of a space of the figure, the oversampling circuit 9 of FIG. 12 actually performs eightfold oversampling.

In FIG. 14, a numeral series shown on the leftmost side indicates values obtained by performing quadruple oversampling on original discrete data values of (-1, 1, 8, 8, 1, -1)/8. Further, in four numeral series from the leftmost side to the right, the values on the leftmost side are shifted downward one by one. A direction of the numeral series indicates a time base in FIG. 14. Shifting a numeral series downward is equivalent to gradual delay of the values on the leftmost side.

Namely, values of the second numeral series from the left indicate values shifted from the values on the leftmost side by a quarter phase of a clock 4CLK, which has a quadruple frequency. Moreover, values on the third numeral series from the left indicate values shifted from the values on the second numeral series from the left by a quarter phase of the clock 4LCK, which has a quadruple frequency. Values on the fourth numeral series from the left indicate values shifted from the values on the third numeral series from the left by a quarter phase of the clock 4LCK, which has a quadruple frequency.

Further, values on the fifth numeral series from the left indicate values obtained by adding values of the first to fourth numeral series for each of the corresponding rows and dividing the added values by four. The operations on the first to fifth numeral series from the left can digitally perform quadruple oversampling together with four-phase convolution.

Values of four numeral series from the fifth numeral series to the right (fifth to eighth numeral series) indicate values shifted downward one by one from values of the fifth numeral series. Also, values on the ninth numeral series from the left indicate values obtained by adding values of the fifth to eighth numeral series for each of the corresponding rows and dividing the added values by four. The operations on the first to ninth numeral series from the left can digitally perform quadruple oversampling twice together with four-phase convolution.

Further, values of the tenth numeral series from the left are shifted downward by one from values of the ninth numeral series. Besides, values of the eleventh numeral series (on the rightmost side) from the left are values obtained by adding values of the ninth numeral series and the tenth numeral series for each corresponding row and dividing the added values by two. The values on the rightmost side are target interpolation values.

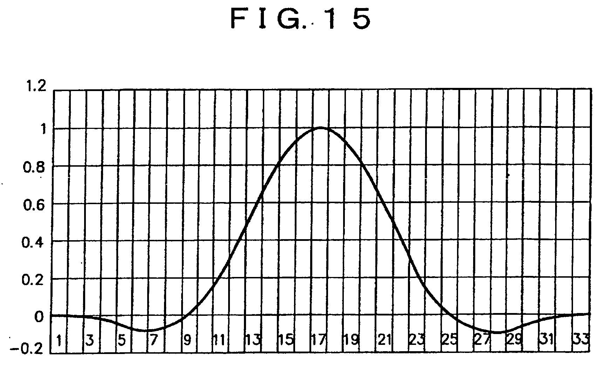

The finally obtained values on the rightmost side of FIG. 14 are shown in a graph of FIG. 15. A function having a waveform of FIG. 15 can be differentiated for one time throughout the region. The function has a limited value other than 0 when a sample position t along a lateral axis is 1 to 33, and values of the function are all set at 0 in other regions.

When the function has a limited value other than 0 on a local region and has 0 in other regions, the state is referred to as a "definite base".

Also, the function of FIG. 15 is a sampling function characterized by having a maximum value only on a sample point of t=17 and a value of 0 on four sample points of t= 1, 9, 25, 33. The function passes through all sample points required for obtaining data with a smooth waveform.

As described above, the function of FIG. 15 is a sampling function, and differentiation can be performed for one time throughout the region. Additionally, the function has a definite base for converging to 0 at sample positions of t=1, 33. Therefore, since superposition is made by using the sampling function of FIG. 15 based on each piece of discrete data, it is possible to interpolate a value between pieces of discrete data by using the function which can be differentiated for one time.

The sinc function of FIG. 9 that is generally used for data interpolation is a function converging to 0 on a sample point of t = ?? . Thus, when an interpolation value is computed accurately, it is necessary to calculate a value of the sinc function on an interpolating position for each piece of discrete data until t = ?? and to perform a convoluting operation using the value. In contrast, the sampling function of FIG. 15 used in the present embodiment converges to 0 on a sample point of t=1, 33. Hence, only discrete data within a range of t=1 to 33 needs to be considered.

Therefore, when a certain interpolation value is obtained, only values of limited n pieces of discrete data need to be considered, thereby largely reducing a quantity of processing. Additionally, discrete data beyond the range of t=1 to 33 is ignored. This is not because a quantity of processing, accuracy, and so on need to be considered despite of the fundamental need for considering the discrete data, but because the discrete data does not need to be considered theoretically. Thus, a censoring error does not occur. Therefore, it is possible to accurately obtain an interpolation value by using the method for interpolating data of the present embodiment, and it is possible to improve a recognition rate by speech recognition using the accurate interpolation value.

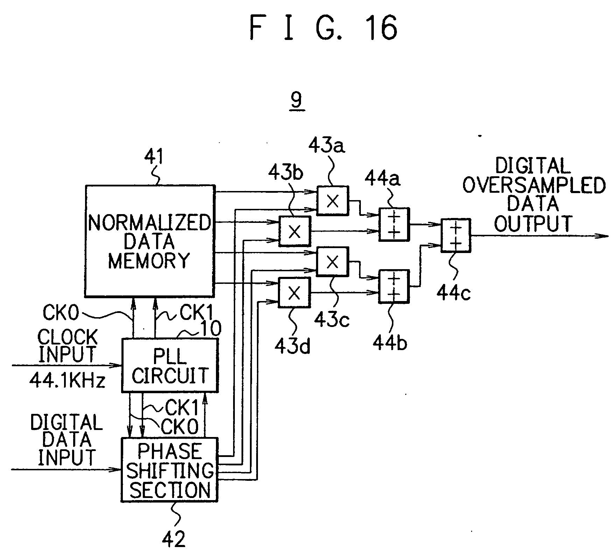

FIG. 16 is a block diagram showing an example of the configuration of the oversampling circuit 9 shown in FIG. 12. As shown in FIG. 16, the oversampling circuit 9 of the present embodiment is constituted by a normalized data memory 41, a phase shifting section 42, a plurality of digital multipliers 43a to 43d, and a plurality of digital adders 44a to 44c. Besides, a PLL circuit 10 of FIG. 16 is identical to that of FIG. 12.

The normalized data memory 41 shifts a series of data in four phases and stores the data. The data has been normalized as shown in a series on the rightmost side of FIG. 14. Additionally, FIG. 14 shows an example in which quadruple oversampling is performed on the digital basic waveform of FIG. 13. Meanwhile, since the oversampling circuit 9 of FIG. 12 performs eightfold oversampling, in the normalized data memory 41, a digital basic waveform undergoes eightfold oversampling and a series of data normalized by convolution is stored. Four-phase normalized data stored in the normalized data memory 41 is read in response to clocks CK0 and CK1 supplied from the PLL circuit 10, and the data of each phase is supplied to one of the input terminals of each of the four digital multipliers 43a to 43d.

Moreover, the phase shifting section 42 performs a phase shifting operation for shifting the phase of discrete data, which is inputted from the A/D converter 2, to four phases. Four-phase discrete data generated by the phase shifting section 42 is outputted in response to the clocks CK0 and CK1 supplied from the PLL circuit 10, and the data of each phase is supplied to the other input terminal of each of the four digital multipliers 43a to 43d.

The four digital multipliers 43a to 43d multiply four-phase normalized data, which is outputted from the normalized data memory 41, and four-phase discrete data, which is outputted from the phase shifting section 42. The three digital adders 44a to 44c, which are connected to the subsequent stage of the multipliers, add all the multiplication results of the four digital multipliers 43a to 43d and output the result of the addition to the data generating section 3 of FIG. 12.

As shown in the configuration of FIG. 16, in the present embodiment, the normalized data memory 41 such as ROM stores in advance normalized data on the rightmost side. The normalized data is obtained by convolution of FIG. 14. And then, the normalized data is modulated to amplitude corresponding to a value of discrete data inputted as data to be compressed. The obtained data is synthesized by four-phase convolution and is outputted.

An amplitude value of inputted discrete data may be multiplied relative to the digital basic waveform of FIG. 13, and convolution of FIG. 14 may be performed on an obtained data value during speech recognition. In the case of the oversampling circuit 9 configured as FIG. 16, it is not necessary to perform convolution of FIG. 1 during actual speech recognition, thereby increasing the speed of recognition.

Additionally, although the oversampling circuit 9 performs eightfold oversampling, the times are not limited to eight times. For example, two times and four times and the like are also applicable.

As specifically described above, in Embodiment 2, oversampling and convolution are performed on inputted discrete digital data in the speech recognition device to generate continuous data having a smooth change, and discrete amplitude data values and timing data values indicative of irregular time intervals are obtained as compressed data from the obtained oversampling data.

In this case, when a function is generated from the digital basic waveform when oversampling and convolution are performed, the function is a sampling function with a definite base for converging values to 0 on a limited sample position, and differentiation is possible for one time. Therefore, when a certain interpolation value is computed, only the limited number of discrete data values needs to be considered, thereby largely reducing a processing quantity. Besides, since a censoring error does not occur, it is possible to obtain an accurate interpolation value, and it is possible to improve a recognizing rate of speech when speech is recognized using the interpolation value.

The above-mentioned speech recognizing and synthesizing methods of Embodiments 1 and 2 can be realized by any of hardware, DSP, and software. For example, in the case of software, the speech recognition device and the speech synthesis device of the present embodiments are actually composed of a CPU or MPU, RAM, ROM, and so on of a computer, and the methods are realized by operating programs stored in RAM and ROM.

Therefore, the methods are realized as follows: programs for operating a computer for achieving the function of the present embodiments are stored in a recording medium such as a CD-ROM, and the programs are read by the computer. As a recording medium for recording such programs, a floppy disk, a hard disk, a magnetic tape, a magneto-optical disk, a nonvolatile memory card, and so on are applicable in addition to a CD-ROM.

Further, in addition to the case where the computer runs supplied programs to achieve the function of the above embodiments, the embodiments of the present invention also include programs used in the case where the programs realize the function of the above embodiments in coordination with OS (operating system), which operates in the computer, or other application software and the like, and the case where all or some of the operations of the supplied programs are performed by a function extended board and a function extended unit of the computer to achieve the function of the above embodiments.

Additionally, each of the above-mentioned embodiments merely shows an example of the present invention. It should be understood that there is no-intention to limit the invention to the specific forms disclosed. Namely, the present invention is to cover various forms within the spirit or major characteristics of the invention.

[Industrial Applicability]

The present invention usefully provides completely new speech recognizing and synthesizing methods using amplitude data and timing data on a predetermined sample point on an aural signal, improves a recognition degree of speech, achieves higher quality of synthetic sound, and simplifies the processing.

**Claims**

1. A speech recognition method **characterized in that** an input aural signal is differentiated, a point where a differentiating value satisfies a predetermined condition is detected as a sample point, discrete amplitude data on each detected sample point and timing data indicative of a time interval between sample points are obtained, correlation data is generated using said amplitude data and timing data, and input speech is recognized by matching said generated correlation data with correlation data generated and stored in advance for a variety of speech.

2. The speech recognition method according to claim 1, **characterized in that** said input aural signal is sampled at a time interval of a point where a differentiating absolute value is at predetermined value or lower.

3. The speech recognition method according to claim 1, **characterized in that** said input aural signal is sampled at a time interval of a point having a minimum differentiating absolute value.

4. The speech recognition method according to claim 1, **characterized in that** said input aural signal is sampled at a time interval of a point where a differentiating value changes in polarity.

5. The speech recognition method according to claim 1, **characterized in that** said correlation data is a ratio of amplitude data on successive sample points and a ratio of timing data between successive sample points.

6. The speech recognition method according to claim 1, **characterized in that** rounding is performed on a lower-order bit of said correlation data.

7. The speech recognition method according to claim 1, **characterized in that** said input aural signal undergoes oversampling and the oversampled data is sampled at a time interval of a point where a differentiating value satisfies a predetermined condition.

8. The speech recognition method according to claim 7, **characterized in that** digital data of a basic waveform, which corresponds to values of n pieces of discrete data obtained by digitizing said input aural signal, is synthesized by oversampling and a moving average operation or a convoluting operation so as to compute a digital interpolation value for said discrete data, and then, said computed digital interpolation value is sampled at a time interval of a point where a differentiating value satisfies a predetermined condition.

9. A speech recognition device, **characterized by** comprising:

   A/D converting means for performing A/D conversion on an input aural signal;
   differentiating means for differentiating digital data outputted from said A/D converting means;
   data generating means which detects as a sample point a point where a differentiating value obtained by said differentiating means satisfies a predetermined condition and which generates amplitude data on each detected sample point and timing data indicative of a time interval between sample points;
   correlating means for generating correlation data by using said amplitude data and timing data that are generated by said data generating means; and
   data matching means for recognizing input speech by matching correlation data, which is generated by said correlating means, with correlation data generated in advance in the same manner and stored in a recording medium for a variety of speech.

10. The speech recognition device according to claim 9, **characterized in that** said data generating means samples digital data, which is outputted from said A/D converting means, at a time interval of a point where a differentiating absolute value is at predetermined value or lower.

11. The speech recognition device according to claim 9, **characterized in that** said data generating means samples digital data, which is outputted from said A/D converting means, at a time interval of a point having a minimum differentiating absolute value.

12. The speech recognition device according to claim 9, **characterized in that** said data generating means samples digital data, which is outputted from said A/D converting means, at a time interval of a point where a differentiating value changes in polarity.

13. The speech recognition device according to claim 9, **characterized in that** said correlating means computes as said correlation data a ratio of amplitude data on successive sample points and a ratio of timing data on successive sample points.

14. The speech recognition device according to claim 9, **characterized in that** said correlating means rounds a lower-order bit of said correlation data.

15. The speech recognition device according to claim 9, **characterized in that** it further comprises oversampling means for oversampling digital data, which is outputted from said A/D converting means, by using a clock having an even number-times frequency, and

said data generating means samples said oversampled data at a time interval of a point where a differentiating value satisfies a predetermined condition.

16. The speech recognition device according to claim 15, **characterized in that** said oversampling means synthesizes digital data of a basic waveform, which corresponds to values of n pieces of discrete data inputted by said A/D converting means, by oversampling and a moving average operation or a convoluting operation so as to compute a digital interpolation value for said discrete data.

17. A speech synthesis method, **characterized in that** data other than speech is associated with a pair of amplitude data on a sample point where a differentiating value of an aural signal satisfies a predetermined condition and timing data indicative of a time interval between sample points, the amplitude data and timing data being generated in advance for said aural signal corresponding to said data other than speech, and when desired data is designated, a pair of said amplitude data and said timing data that is associated with said designated data is used for obtaining interpolation data for interpolating pieces of said amplitude data having a time interval indicated by said timing data, so that speech is synthesized.

18. The speech synthesis method according to claim 17, **characterized in that** interpolation data for interpolating two pieces of amplitude data is obtained by using a sampling function with a definite base that is obtained from two pieces of amplitude data on successive two sample points and timing data between said sample points.

19. A speech synthesis device, **characterized by** comprising:

storing means for storing in association with data other than an aural signal a pair of amplitude data on a sample point where a differentiating value of an aural signal satisfies a predetermined condition and timing data indicative of a time interval between sample points, said amplitude data and timing data being generated in advance for said aural signal corresponding to said data other than speech;
interpolating means which obtains interpolation data for interpolating pieces of said amplitude data having a time interval indicated by said timing data when desired data is designated, said interpolation data being obtained by using a pair of said amplitude data and said timing data that is stored in said storing means in association with said designated data; and
D/A converting means for performing D/A conversion on interpolation data obtained by said interpolating means.

20. The speech synthesis device according to claim 19, **characterized in that** it further comprises timing control means for controlling timing such that amplitude data on sample points is sequentially read at a time interval of sample points according to timing data which is read from said storing means and is indicative of a time interval of said sample points, and

said interpolating means obtains interpolation data for interpolating two pieces of amplitude data by using two pieces of amplitude data on two successive sample points and timing data between said sample points, said amplitude data being read under control of said timing control means.

21. The speech synthesis device according to claim 20, **characterized in that** said interpolating means obtains interpolation data for interpolating two pieces of amplitude data by using a sampling function with a definite base that is obtained from said two pieces of amplitude data on successive two sample points and timing data between said sample points.

22. A recording medium being capable of computer reading, **characterized by** recording a program for allowing a computer to perform the steps of said speech recognition method according to claim 1.

**23.** A recording medium being capable of computer reading, **characterized by** recording a program for allowing a computer to function as means of claim 9.

**24.** A recording medium being capable of computer reading, **characterized by** recording a program for allowing a computer to perform the steps of said speech synthesis method according to claim 17.

**25.** A recording medium being capable of computer reading, **characterized by** recording a program for allowing a computer to function as means of claim 19.

# FIG. 1

INPUT ANALOG SIGNAL → LPF (1) → A/D CONVERTER (2) → DATA GENERATING SECTION (3) → CORRELATING SECTION (4) → DATA REGISTERING SECTION (5) → DATA MEMORY (6)

INPUT CLOCK
CKO

MODE DESIGNATING SECTION (8)

DATA MATCHING SECTION (7)

SPEECH RECOGNITION RESULTS

EP 1 288 912 A1

# F I G. 2

# F I G. 3

# F I G. 4

# F I G. 5

301

DIFFERENTIATOR

DIGITAL DATA →

21
FIRST DIFFERENTIATING SECTION

→

22
ROUNDING SECTION

→

23
SECOND DIFFERENTIATING SECTION

302

SAMPLE POINT DETECTING SECTION

24
POLARITY CHANGING POINT DETECTING SECTION

25
THRESHOLD VALUE PROCESSING SECTION

→ TO 303

F I G. 6

DATA MEMORY — 13

AMPLITUDE DATA

READING CLOCK

TIMING DATA

D — 15

TIMING GENERATOR — 14

INTERPOLATING SECTION — 16

D/A CONVERTER — 17

LPF — 18

ANALOG OUTPUT

INPUT CLOCK CKO

DATA READING SECTION — 12

TEXT DATA

TEXT ANALYZING SECTION — 11

# F I G. 7

FIG. 8A

FIG. 8B

FIG. 9

# F I G. 1 0

# F I G. 1 1

# F I G. 12

EP 1 288 912 A1

# F I G. 1 3

# F I G. 1 4

| | | | | | | | | | | |
|---|---|---|---|---|---|---|---|---|---|---|
| 0 | 0 | 0 | 0 | 0 | 0 | 0 | 0 | 0 | 0 | 0 |
| -0.125 | 0 | 0 | 0 | -0.031 | 0 | 0 | 0 | -0.008 | | -0.004 |
| -0.125 | -0.125 | 0 | 0 | -0.063 | -0.031 | 0 | 0 | -0.023 | -0.008 | -0.016 |
| -0.125 | -0.125 | -0.125 | 0 | -0.094 | -0.063 | -0.031 | 0 | -0.047 | -0.023 | -0.035 |
| -0.125 | -0.125 | -0.125 | -0.125 | -0.125 | -0.094 | -0.063 | -0.031 | -0.078 | -0.047 | -0.063 |
| 0.125 | -0.125 | -0.125 | -0.125 | -0.063 | -0.125 | -0.094 | -0.063 | -0.086 | -0.078 | -0.082 |
| 0.125 | 0.125 | -0.125 | -0.125 | 0 | -0.063 | -0.125 | -0.094 | -0.07 | -0.086 | -0.078 |
| 0.125 | 0.125 | 0.125 | -0.125 | 0.0625 | 0 | -0.063 | -0.125 | -0.031 | -0.07 | -0.051 |
| 0.125 | 0.125 | 0.125 | 0.125 | 0.125 | 0.0625 | 0 | -0.063 | 0.0313 | -0.031 | 0 |
| 1 | 0.125 | 0.125 | 0.125 | 0.3438 | 0.125 | 0.0625 | 0 | 0.1328 | 0.0313 | 0.082 |
| 1 | 1 | 0.125 | 0.125 | 0.5625 | 0.3438 | 0.125 | 0.0625 | 0.2734 | 0.1328 | 0.2031 |
| 1 | 1 | 1 | 0.125 | 0.7813 | 0.5625 | 0.3438 | 0.125 | 0.4531 | 0.2734 | 0.3633 |
| 1 | 1 | 1 | 1 | 1 | 0.7813 | 0.5625 | 0.3438 | 0.6719 | 0.4531 | 0.5625 |
| 1 | 1 | 1 | 1 | 1 | 1 | 0.7813 | 0.5625 | 0.8359 | 0.6719 | 0.7539 |
| 1 | 1 | 1 | 1 | 1 | 1 | 1 | 0.7813 | 0.9453 | 0.8359 | 0.8906 |
| 1 | 1 | 1 | 1 | 1 | 1 | 1 | 1 | 1 | 0.9453 | 0.9727 |
| 1 | 1 | 1 | 1 | 1 | 1 | 1 | 1 | 1 | 1 | 1 |
| 0.125 | 1 | 1 | 1 | 0.7813 | 1 | 1 | 1 | 0.9453 | 1 | 0.9727 |
| 0.125 | 0.125 | 1 | 1 | 0.5625 | 0.7813 | 1 | 1 | 0.8359 | 0.9453 | 0.8906 |
| 0.125 | 0.125 | 0.125 | 1 | 0.3438 | 0.5625 | 0.7813 | 1 | 0.6719 | 0.8359 | 0.7539 |
| 0.125 | 0.125 | 0.125 | 0.125 | 0.125 | 0.3438 | 0.5625 | 0.7813 | 0.4531 | 0.6719 | 0.5625 |
| -0.125 | 0.125 | 0.125 | 0.125 | 0.0625 | 0.125 | 0.3438 | 0.5625 | 0.2734 | 0.4531 | 0.3633 |
| -0.125 | -0.125 | 0.125 | 0.125 | 0 | 0.0625 | 0.125 | 0.3438 | 0.1328 | 0.2734 | 0.2031 |
| -0.125 | -0.125 | -0.125 | 0.125 | -0.063 | 0 | 0.0625 | 0.125 | 0.0313 | 0.1328 | 0.082 |
| -0.125 | -0.125 | -0.125 | -0.125 | -0.125 | -0.063 | 0 | 0.0625 | -0.031 | 0.0313 | 0 |
| 0 | -0.125 | -0.125 | -0.125 | -0.094 | -0.125 | -0.063 | 0 | -0.07 | -0.031 | -0.051 |
| 0 | 0 | -0.125 | -0.125 | -0.063 | -0.094 | -0.125 | -0.063 | -0.086 | -0.07 | -0.078 |
| 0 | 0 | 0 | -0.125 | -0.031 | -0.063 | -0.094 | -0.125 | -0.078 | -0.086 | -0.082 |
| 0 | 0 | 0 | 0 | 0 | -0.031 | -0.063 | -0.094 | -0.047 | -0.078 | -0.063 |
| 0 | 0 | 0 | 0 | 0 | 0 | -0.031 | -0.063 | -0.023 | -0.047 | -0.035 |
| 0 | 0 | 0 | 0 | 0 | 0 | 0 | -0.031 | -0.008 | -0.023 | -0.016 |
| 0 | 0 | 0 | 0 | 0 | 0 | 0 | 0 | 0 | -0.008 | -0.004 |
| 0 | 0 | 0 | 0 | 0 | 0 | 0 | 0 | 0 | 0 | 0 |

FIG. 15

# F I G. 16

<u>9</u>

## INTERNATIONAL SEARCH REPORT

International application No.

PCT/JP01/03079

| A. CLASSIFICATION OF SUBJECT MATTER |
|---|
| Int.Cl$^7$   G10L15/10, G10L13/00 |
| According to International Patent Classification (IPC) or to both national classification and IPC |

| B. FIELDS SEARCHED |
|---|
| Minimum documentation searched (classification system followed by classification symbols) |
| Int.Cl$^7$   G10L11/00-21/06 |

Documentation searched other than minimum documentation to the extent that such documents are included in the fields searched
| Jitsuyo Shinan Koho | 1922-1996 | Toroku Jitsuyo Shinan Koho | 1994-2001 |
| Kokai Jitsuyo Shinan Koho | 1971-2001 | Jitsuyo Shinan Toroku Koho | 1996-2001 |

Electronic data base consulted during the international search (name of data base and, where practicable, search terms used)
    JICST FILE (JOIS)

### C. DOCUMENTS CONSIDERED TO BE RELEVANT

| Category* | Citation of document, with indication, where appropriate, of the relevant passages | Relevant to claim No. |
|---|---|---|
| X | JP, 11-73199, A (Dainippon Printing Co., Ltd.), 16 March, 1999 (16.03.99), all pages; all drawings   (Family: none) | 17-21,24-25 |
| X | JP, 10-247099, A (Dainippon Printing Co., Ltd.), 14 September, 1998 (14.09.98), all pages; all drawings (Family: none) | 17-21,24-25 |
| A | JP, 6-77198, B2 (Canon Inc.), 28 September, 1994 (28.09.94), all pages; all drawings   (Family: none) | 1-16,22-23 |
| A | JP, 1-149099, A (Murakami Kogyosho K.K.), 12 June, 1989 (12.06.89), all pages; all drawings   (Family: none) | 1-16,22-23 |

☐ Further documents are listed in the continuation of Box C.   ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17 May, 2001 (17.05.01) | 29 May, 2001 (29.05.01) |

| Name and mailing address of the ISA/ | Authorized officer |
|---|---|
| Japanese Patent Office | |
| Facsimile No. | Telephone No. |

Form PCT/ISA/210 (second sheet) (July 1992)